(19) **Europäisches Patentamt**

**European Patent Office**

**Office européen des brevets**

(11) **EP 0 520 389 B1**

(12) **EUROPÄISCHE PATENTSCHRIFT**

(45) Veröffentlichungstag und Bekanntmachung des Hinweises auf die Patenterteilung:
**10.01.1996 Patentblatt 1996/02**

(51) Int. Cl.$^6$: **B60K 17/36**, B60K 17/32

(21) Anmeldenummer: **92110596.1**

(22) Anmeldetag: **24.06.1992**

(54) **Antriebsvorrichtung für Tandemachsen**

Drive system for tandem axles

Dispositif d'entraînement pour essieux en tandem

(84) Benannte Vertragsstaaten:
**DE DK SE**

(30) Priorität: **24.06.1991 DE 4120801**

(43) Veröffentlichungstag der Anmeldung:
**30.12.1992 Patentblatt 1992/53**

(73) Patentinhaber: **NEUNKIRCHNER MASCHINEN- UND ACHSENFABRIK GmbH & Co. KG**
**D-81245 München (DE)**

(72) Erfinder: **Auer, Ernst, Dipl.-Ing.**
**W-8000 München 60 (DE)**

(74) Vertreter: **Strasse, Joachim, Dipl.-Ing.**
**D-81541 München (DE)**

(56) Entgegenhaltungen:
WO-A-85/05330      DE-A- 2 522 542
FR-A- 2 185 976      US-A- 3 512 799

- SOVIET INVENTIONS ILLUSTRATED Section PQ, Week 8437, 24. Oktober 1984 Derwent Publications Ltd., London, GB; Class Q, AN 84-229849 & SU-A-1 066 850 (DEGOVTSOV) 15. Januar 1984
- SOVIET INVENTIONS ILLUSTRATED Section PQ, Week 8609, 17. März 1986 Derwent Publications Ltd., London, GB; Class Q, AN 86-061051 & SU-A-1 172 761 (BELORUSSIAN) 15. August 1985

**Beschreibung**

Die Vorliegende Erfindung bezieht sich auf eine Antriebsvorrichtung für Tandemachsen von Arbeitsmaschinen, insbesondere zum Einsatz in schwierigem Gelände, mit einem Zahnradgetriebe zur gleichmäßigen Kraftübertragung auf Vorder-und Hinterräder einer Seite einer Tandemachse.

Arbeitsmaschinen sind beispielsweise Kraftfahrzeuge für die Forstwirtschaft, z.B. solche, die mit Sägen, Greif-, Entastungs- und/oder Transportvorrichtungen versehen sind.

Verschiedenartige Antriebsvorrichtungen für Tandemachsen sind aus dem Stand der Technik bekannt. So kann zwischen Tandemachsen mit Zahnrädern und Tandemachsen mit Kettenantrieb unterschieden werden. Bei Tandemachsen mit Zahnrädern sind Ausführungsformen mit und ohne Planeten-Ausführung bekannt. Die Nachteile letzterer Ausführungsform liegen in der durch die fehlende Endübersetzung und die damit verbundenen großen Durchmesser der Stirnräder geringen Bodenfreiheit der Tandemachsengehäuse, sowie deren hohem Gewicht, da breite Zahnräder erforderlich sind. Ein weiterer Nachteil liegt darin, daß wegen der Drehrichtung nur ein Stirn-Zwischenrad verwendet werden kann, wodurch die Übersetzung auf maximal 1,8 bis 2,2 begrenzt ist. Des weiteren ist keine Bremsanordnung links und rechts vom Differential möglich, da wegen der fehlenden Kastenübersetzung ein großes Tellerrad im Differential erforderlich ist oder zusätzlich zwei Planetengetriebe neben dem Differential eingebaut sein müssen. Vorteilhaft an den bekannten Tandemachsen mit Zahnrädern und ohne Planeten-Endstufe ist die Tatsache, daß der Aufrichteffekt der Tandemachse wegen der geringen Übersetzung gering ist und eine gleichmäßige Auslastung der vorderen und hinteren Räder gewährleistet ist. Der Aufrichteffekt macht sich dann nachteilig bemerkbar, wenn aufgrund der Bodenverhältnisse eines der Tandemräder blockiert oder stärker als das andere Rad derselben Achse abgebremst wird und dadurch dieses Rad die Bodenhaftung durch Abheben verliert. Bei Tandemachsen mit Zahnrädern und einer Planeten-Ausführung, wie sie z.B. in der DE-OS 2522542 und der EP 0 180 585 beschrieben sind, ist eben dieser Aufrichteffekt wegen der hohen Übersetzung groß, was auch zu einer ungleichmäßigen Auslastung der einzelnen Triebteile führt, wobei das Drehmoment nachteiligerweise zu 100% auf einer Seite liegen kann. Vorteilhaft an dieser bekannten Ausführungsform ist die Tatsache, daS kleine, schmale Zahnräder verwendet werden können, die ein geringes Gesamtgewicht bedingen. Des weiteren wird durch die Verwendung eines kleinen Stirnrades eine gute Bodenfreiheit für den Tandemkasten erzielt.

Bei ebenfalls bekannten Tandemachsen mit Kettenantrieb kann wiederum zwischen Ausführungsformen mit und ohne Planeten-Endstufe unterschieden werden. Hierbei treten ähnliche Vor- und Nachteile wie bei den Tandemachsen mit Zahnrädern auf.

Aufgabe der vorliegenden Erfindung ist es, eine Antriebsvorrichtung gemäß Oberbegriff des Patentanspruches 1 so auszubilden, daß die Kräfteverteilung auf die vorderen und hinteren Räder gleichmäßig erfolgt, somit ein Aufrichteffekt weitgehend verhindert wird, wobei die Übersetzung des Systems und die Bodenfreiheit der Tandemachsenkästen hoch sind und das Gewicht der Vorrichtung gering gehalten wird.

Diese Aufgabe wird durch die im kennzeichnenden Teil des Patentanspruchs 1 angegebenen Merkmale gelöst.

In vorteilhafter Ausgestaltung besteht das zweifache Planentengetriebe aus einem ersten und einem Zweiten Planetengetriebe, wobei erste und zweite Planetenräder der Planetengetriebe über eine Planetenwelle fest miteinander verbunden sind. Das erste Planetenrad des mit einer Treibwelle verbundenen Planetengetriebes ist vorteilhafter Weise in einem innenverzahnten Gehäuseteil drehbar gelagert, wobei dieses Gehäuseteil mit einem Fahrgestellrohr fest verschraubt ist und die Treibwelle mit einer Kardanwelle in Verbindung steht. Das zweite Planetenrad des zweiten Planetengetriebes ist dagegen vorteilhafter Weise in einem innenverzahnten Gehäuseteil, welches über eine Befestigung an einem Tandemachsengehäuse befestigt ist, drehbar gelagert.

Durch diese Vorrichtung wird erfindungsgemäß gewährleistet, daß bei einseitiger Belastung der Tandemräder einer Seite das hohe Drehmoment geteilt wird und somit eine kleine, wirksame Tandemachsen-Übersetzung mit geringem Aufrichteffekt erzielt wird. Ein Teil des in diese Seite der Tandemachse eingeleiteten Momentes wird durch die Einleitung in das Tandemachsengehäuse wirksam dazu benutzt, dem Aufrichtmoment entgegenzuwirken. Das bedeutet, daß das aufsteigende Rad gegen den Boden gedrückt wird. Ein geringes Aufsteigen ist jedoch nicht unbedingt schädlich, da dadurch ein "Übersteigen" eines im Gelände befindlichen Hindernisses, beispielsweise eines Steines oder Holzstammes, eingeleitet werden kann. Es wird aber vermieden, daß das abhebende Rad vollständig hochsteigt.

Da durch die Verwendung eines Planetengetriebes ein kleines Endstufenrad verwendet werden kann, ist eine hohe Bodenfreiheit gegeben.

Die weitere Verteilung des Drehmomentes hinter dem erfindungsgemäß gebrauchten "Stützgetriebe" erfolgt notwendigerweise durch Zahnräder oder Ketten bis zu einem Endgetriebe kurz vor dem Rad.

Ein weiterer Vorteil der erfindungsgemäßen Vorrichtung ist das geringe Gesamtgewicht, welches durch den Einsatz von gering dimensionierten Wellen und Zahnrädern oder Ketten erzielt wird.

Weitere Einzelheiten, Merkmale und Vorteile ergeben sich aus der folgenden Beschreibung eines zeichnerisch dargestellten Ausführungsbeispieles.

Es zeigen:

Fig. 1: eine Übersichtszeichnung über die Lage der erfindungsgemäßen Antriebsvorrichtung innerhalb einer Arbeitsmaschine

Fig. 2: einen Schnitt durch die erfindungsgemäße Antriebsvorrichtung

Fig. 3: eine Seitenansicht einer Tandemachse, und

Fig. 4: einen Schnitt durch das erfindungsgemäße zweifache Planetengetriebe

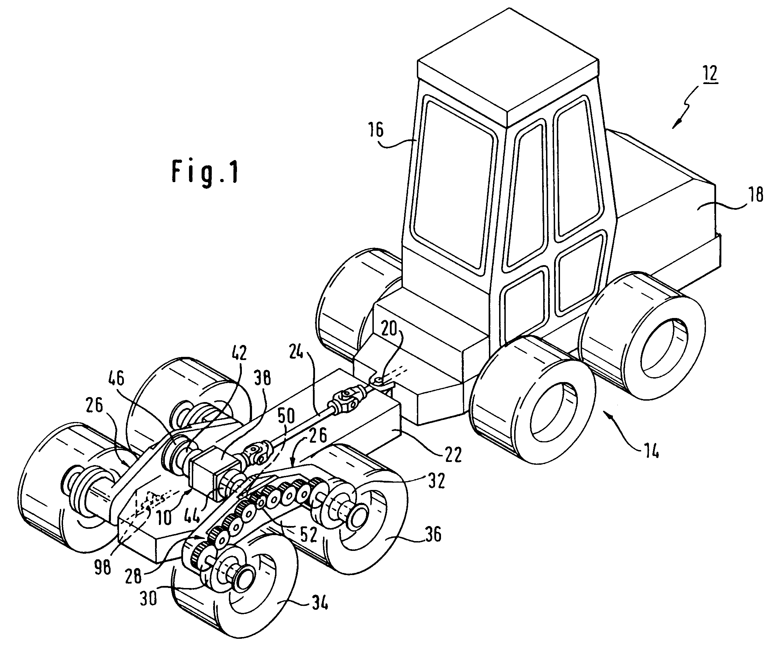

Fig. 1 zeigt in einer schematischen Übersichtszeichnung die Lage einer erfindungsgemäßen Antriebsvorrichtung 10 innerhalb eines Fahrzeuges 12. Das Fahrzeugvorderteil 14 ist schematisch dargestellt und zeigt die Fahrerkabine 16 und die Lage des Motors 18. Das Fahrzeugvorderteil 14 ist mittels eines Knickgelenkes 20 mit dem Hinterrahmen 22 gelenkig verbunden. Die Kardanwelle 24 reicht vom Motor 18 bis zur erfindungsgemäßen Antriebsvorrichtung 10, wobei die Kardanwelle 24 an der Übergangsstelle zwischen Fahrzeugvorderteil 14 und dem Hinterrahmen 22 ebenfalls gelenkig ausgebildet ist. Ebenfalls schematisch ist als Beispiel einer Fortleitung des Antriebsmomentes ein Zahnradantrieb 28 in der Tandemachse 26 dargestellt, wobei über den Zahnradantrieb 28 die Kräfteverteilung hin zu den Planetenendstufen 30 und 32 erfolgt. An dieser schematischen Darstellung läßt sich erkennen, daß die Kräfteverteilung auf die beidseitig vom Hinterrahmen 22 angebrachten Tandemachsen 26 mittels eines Differentials erfolgt. Die weitere Kraftübertragung in Richtung der beiden Tandemachsen 26 erfolgt über eine in dieser Figur nicht dargestellte Treibwelle 64, die innerhalb des Fahrgestellrohres 42 angebracht ist. Die Treibwelle 64 ist erfindungsgemäß mit einem im Gehäuse 46 liegenden Drehmomentteiler 62 verbunden, welcher wiederum die Kräfte auf ein Stirnrad 52 im Radkasten leitet. Das Stirnrad 52 verteilt die Kräfte mittels des Zahnradantriebes 28 auf die beiden Planetenendstufen 30 und 32. Notwendigerweise weist der Zahnradantrieb 28 eine ungerade Anzahl von Zahnrädern auf. Statt dessen kann auch eine Kette benutzt werden.

Diese Stufe der Momentübertragung hat nur eine geringe Untersetzung. Die entgültige Untersetzung erfolgt erst in der Radachse, was zu dem gefürchteten Aufstelleffekt führen kann.

Ein ebenfalls in Figur 1 dargestellter Stopper 98 ist an dem Hinterrahmen 22 befestigt und dient zur Einschränkung der Beweglichkeit des Tandemachsengehäuses 48.

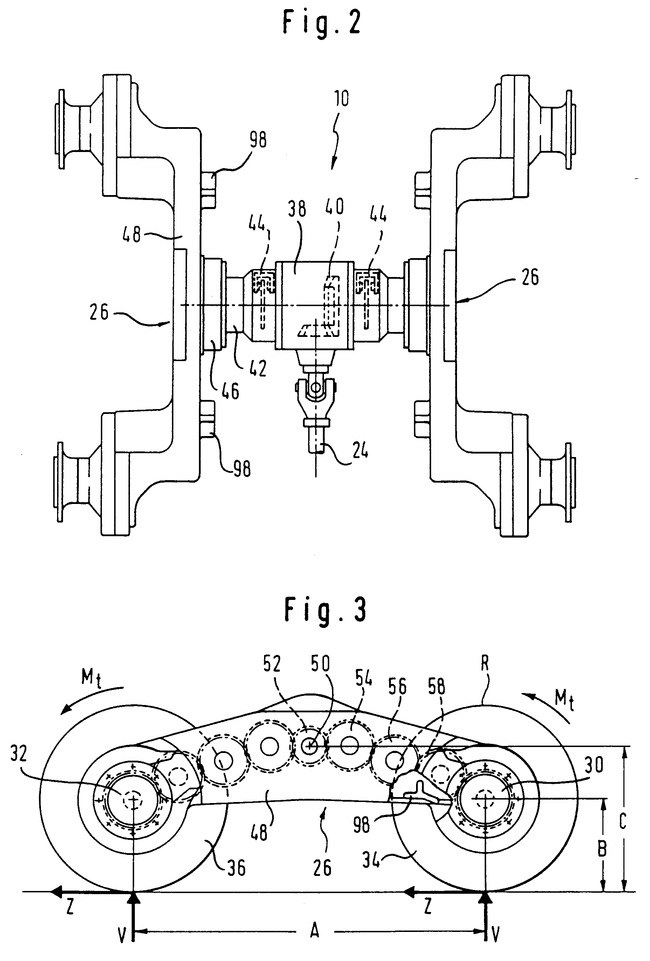

Fig. 2 zeigt die schematische Anordnung der erfindungsgemäßen Antriebsvorrichtung für Tandemachsen 26. Man erkennt, daß die Kardanwelle 24 mit dem im Differentialgehäuse 38 gelagerten Differential 40 in Verbindung steht und daß links und rechts vom Differential 40 Bremsen 44 angebracht sind, welche vorzugsweise als Scheibenbremsen ausgebildet sind, wobei jedoch auch andere Arten von Bremsen verwendet werden können.

Fig. 3 zeigt die Tandemachse 26 in einer schematischen Seitenansicht. Man erkennt, daß die in dem Tandemgehäuse 48 drehbar gelagerten Zahnräder 54, 56 und 58 miteinander verzahnt sind und für die Kraftübertragung von dem Stirnrad 52 auf die Planetenendstufen 30 und 32 verantwortlich sind.

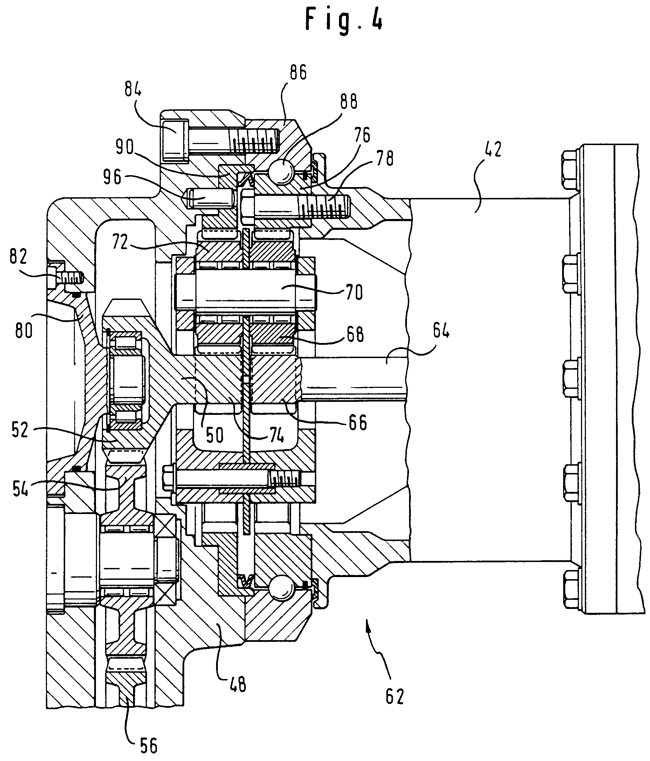

Fig. 4 zeigt einen Schnitt durch das erfindungsgemäße zweifache Planetengetriebe 62. Das zweifache Planetengetriebe 62 besteht in diesem Ausführungsbeispiel aus einem ersten und einem zweiten Planetengetriebe aus einem ersten Sonnenrad 66 und einem ersten Planetenrad 68 bzw. einem zweiten Sonnenrad 74 und einem zweiten Planetenrad 72, wobei erste und zweite Planetenräder 68 und 72 der Planetengetriebe über eine Planetenwelle 70 miteinander fest verbunden sind. Das Sonnenrad 66 ist mit der Treibwelle 64 verbunden und treibt das erste Planetenrad 68 an, welches in einem innen verzahnten Gehäuseteil 76 verzahnt ist. Das Gehäuseteil 76 ist mittels einer Schraube 78 mit dem Fahrgestellrohr 42 fest verbunden. Das zweite Planetenrad 72 ist in einem innen verzahnten Gehäuseteil 90 verzahnt, welches über eine Befestigung 96 mit dem Tandemachsengehäuse 48 verbunden ist. Die Kraftübertragung in dem erfindungsgemäßen zweifachen Planetengetriebe 62 erfolgt ausgehend von der Treibwelle 64 über das erste Sonnenrad 66 und das damit koaxial verzahnte erste Planetenrad 68 sowie in Fortführung über das mit dem ersten Planetenrad 68 fest verbundene zweite Planetenrad 72 auf ein zweites Sonnenrad 74. Das zweite Sonnenrad 74 treibt eine Zentralwelle 50 an, welche die Kraft über das Stirnrad 52 auf den Zahnradantrieb 28 überträgt. Die Treibwelle 64 und die Zentralwelle 50 sind achsengleich gelagert. Die Zentralwelle 50 ist in dem Tandemgehäuse 48 mittels einer Lagerung 80 gelagert und ist über die Schraube 82 fest mit dem Tandemachsengehäuse 48 verbunden. Anstelle des Zahnradantriebes 28 kann ebenfalls ein Ketten- oder Bandantrieb verwendet werden.

Das Tandemachsengehäuse 48 ist über den Rahmen 86 beweglich am äußeren Teil des innenverzahnten Gehäuses 76 mittels eines Kugellagers 88 gelagert, wobei der Rahmen 86 mit dem Tandemachsengehäuse 48 über die Schraube 84 fest verbunden ist.

Der sogenannte Aufrichteffekt, welcher aus einer ungleichmäßigen Kraftbeanspruchung auf eines der beiden Räder 34 oder 36 der Tandemachse 26 resultiert, wird durch das erfindungsgemäße zweifache Planentengetriebe 62 dadurch verhindert, daß das ungleichmäßig auftretende Kraftmoment in zwei gleichmäßigere Kraftmomente aufgeteilt wird, die einerseits gegen das Fahrzeuggestell und anderseits gegen das Tandemachsengehäuse 48 wirken und damit dem aufsteigenden Rad eine Gegenkraft entgegensetzt.

Um die Vorteile der Erfindung zu verdeutlichen, wird im folgenden angenommenen Zahlenbeispiel eine übliche Tandemachse (I) mir einer starren Radübersetzung unmittelbar am Rad mit der Folge der Tendenz eines Aufsteigens eines Rades sowie eine konventionelle Anordnung (II) ohne (1:1) Untersetzung in der Tandemachse einer erfindungsgemäßen Achse (III) anhand der Figur 3 gegenübergestellt.

In allen drei Fällen ist eine Last von 11000 kp auf vier Räder R zu verteilen. Dies ergibt 2750 kp pro Rad. Die Vertikalkraft V ergibt bei einem Radradius B = 562 mm und $\mu$ = 0,6 eine Komponente Z von (0,6 x 2750) 1650 kp. Diese Annahme führt in allen drei Fällen zu einem Drehmoment $M_t$ von (1650 x 0,562) 927 mkp. Mit Bezug auf die Höhe C der Achse 50 über dem Boden mit angenommenen 762 mm und einem Radabstand A = 1304 mm führt dies zu folgender Verteilung:

$$\delta R = \frac{(2 \times 1650) \times 0,762}{1,304} = \pm 1928$$

Im Fall (I) ohne Erfindung aber mit hoher Endübersetzung führt dies zu folgenden starken Kräfte- und Momentdifferenzen, die zum Aufsteigen eines Rades führen:

$$2750 - 1928 = 822 \text{ kp}$$

$$2750 + 1928 = 4678 \text{ kp}$$

$$\text{oder: } 822 \times 0,6 \times 0,562 = 277 \text{ mkp}$$

$$4678 \times 0,6 \times 0,562 = 1577 \text{ mkp.}$$

Im Falle (II) ohne Untersetzung in der Tandemachse würde dieser Unterschied vermieden werden. Aber die 1:1 große Übersetzung in der Achse setzt eine Drehmomentaufbereitung vor der Achse mit allen technischen Konsequenzen voraus:

$$2 \times 927 \text{ mkp} = 1854 \text{ mkp}$$

Die Drückkraft verteilt sich 1854/1,304 = ± 1421 kp. Der Radlastunterschied ist nicht groß, nämlich:

$$822 \times 1421 = 2243 \text{ kp}$$

$$\text{zu } 4678 - 1421 = 3257 \text{ kp.}$$

Bei der Erfindung (III) erfolgt mit großem Gewinn für alle Dimensionierungen die Endübersetzung mit $c_w$ 1,46 erst am Schluß.
Das Zentralmoment wird deshalb

$$1854/1,46 = 1270 \text{ mkp.}$$

Die Drückkraft stellt sich zu

$$1270/1,304 = 974 \text{ kp}$$

ein.
Der Radlastunterschied von

$$822 + 974 = 1796 \text{ kp}$$

$$\text{zu } 4678 - 974 = 3704 \text{ kp}$$

ergibt genau die gewünschte Verteilung.

**Patentansprüche**

1. Antriebsvorrichtung (10) für Tandemachsen von Arbeitsmaschinen, insbesondere zum Einsatz in schwierigem Gelände, mit einem Antrieb (52, 54, 56, 58) zur Kraftübertragung auf Vorder- und Hinterräder (34, 36) der Tandemachsen der von einer Antriebswelle (24) über ein Differential (40) auf eine Treibwelle (64) ausgeübten Kraft, mit einem ersten und einem zweiten Planetengetriebe (66, 68, 72, 74), wobei die Planetenräder (68, 72) des ersten und zweiten Planetengetriebes (66, 68, 72, 74) über jeweils eine Planetenwelle (70) miteinander verbunden sind,
dadurch **gekennzeichnet,** daß
das erste Planetengetriebe (66, 68) sich mit seinen Planetenrädern (68) an einem fest mit einem Fahrgestellrohr (42) verbundenen ersten Hohlrad (76) und sich das zweite Planetengetriebe (72, 74) mit seinen Planetenrädern (72) an einem fest mit einem Tandemachsengehäuse (48) verbundenen zweiten Hohlrad (90) abstützt.

2. Antriebsvorrichtung nach Anspruch 1,
dadurch **gekennzeichnet,** daß
der Antrieb über ein erstes Sonnenrad (66) des ersten Planetengetriebes (66, 68) und der Antrieb über ein zweites Sonnenrad (74) des zweiten Planetengetriebes (72, 74) erfolgt.

3. Antriebsvorrichtung nach Anspruch 1 oder 2,
dadurch **gekennzeichnet,** daß
die Kraftübertragung von der Treibwelle (64) über das erste Sonnenrad (66) und das damit verzahnte erste Planetenrad (68) sowie über das mit dem ersten Planetenrad (68) über die Planetenwelle (70) verbundene zweite Planetenrad (72) auf das zweite Sonnenrad (74) erfolgt, wobei das zweite Sonnenrad (74) eine Zentralwelle (50) antreibt, welche die Kraft über ein Stirnrad (52) auf den Antrieb (54, 56, 58) überträgt.

4. Antriebsvorrichtung nach Anspruch 3,
dadurch **gekennzeichnet,** daß
die Treibwelle (64) und die Zentralwelle (50) achsengleich gelagert sind.

5. Antriebsvorrichtung nach Anspruch 3,
dadurch **gekennzeichnet,** daß
die Zentralwelle (50) in dem Tandemachsengehäuse (48) mittels einer Lagerung (80), welche mit dem Tandemachsengehäuse (48) über Schrauben (82) fest verbunden ist, gelagert ist.

6. Antriebsvorrichtung nach Anspruch 3,
dadurch **gekennzeichnet,** daß
als Antrieb ein Zahnradantrieb (28), ein Ketten- oder Bandantrieb verwendet wird.

**7.** Antriebsvorrichtung nach einem der Ansprüche 1 bis 6,
dadurch **gekennzeichnet,** daß
das Tandemachsengehäuse (48) über einen Rahmen (86) beweglich am äußeren Teil des ersten Hohlrades (76) mittels eines Kugellagers (88) gelagert ist, wobei der Rahmen (86) mit dem Tandemachsengehäuse (48) über Schrauben (84) fest verbunden ist.

**8.** Antriebsvorrichtung nach einem der Ansprüche 1 bis 7,
dadurch **gekennzeichnet,** daß
die Beweglichkeit des Tandemachsengehäuses (48) durch einen am Hinterrahmen (22) befestigten Stopper (98) eingeschränkt ist.

## Claims

**1.** A drive system (10) for tandem axles of machines, in particular for use in difficult terrain, comprising a drive unit (52, 54, 56, 58) for transmitting - to front and rear wheels (34, 36) of the tandem axles - the force exerted by a drive shaft (24) on a driving shaft (64) via a differential (40), comprising a first and a second planetary gear (66, 68, 72, 74), in which the planet wheels (68, 72) of the first and the second planetary gear (66, 68, 72, 74) each are interconnected via a planetary shaft (70),
**characterized in**
that said first planetary gear (66, 68) is supported, via its planet wheels (68), by a first ring gear (76) firmly connected to a chassis tube (42) and said second planetary gear (72, 74) is supported, via its planet wheels (72), by a second ring gear (90) firmly connected to a tandem axle casing (48).

**2.** The drive system of claim 1,
**characterized in**
that the driving is effected via a first sun wheel (66) of said first planetary gear (66, 68) and the output is effected via a second sun wheel (74) of the second planetary gear (72, 74).

**3.** The drive system of claims 1 or 2,
**characterized in**
that the force is transmitted from the drive shaft (64) via the first sun wheel (66) and the first planet wheel (68) meshed therewith as well as via the second planet wheel (72), which is connected with the first planet wheel (68) via the planet shaft (70), to the second sun wheel (74), said second sun wheel (74) driving a central shaft (50) which transmits the force to the drive unit (54, 56, 58) via a spur wheel (52).

**4.** The drive system of claim 3,
**characterized in**
that said driving shaft (64) and said central shaft (50) are supported on the same axle.

**5.** The drive system of claim 3,
**characterized in**
that said central shaft (50) is supported by a bearing means (80) in said tandem axle casing (48) which bearing means (80) is firmly attached to said tandem axle casing (48) by means of bolts (82).

**6.** The drive system of claim 3,
**characterized in**
that a gearwheel drive (28), a chain drive or a belt drive are used as the drive unit.

**7.** The drive system of one of claims 1 to 6,
**characterized in**
that said tandem axle casing (48) is movably supported by means of a ball bearing (88) on the outer part of the first ring gear (76) via a frame (86), said frame (86) being firmly attached to the tandem axle casing (48) by means of bolts (84).

**8.** The drive system of one of claims 1 to 7,
**characterized in**
that the moving range of the tandem axle casing (48) is limited by a stopper (98) mounted on the rear frame (22).

## Revendications

**1.** Dispositif d'entraînement (10) pour essieux jumelés de machines de chantier destinées en particulier à être mises en oeuvre en terrains difficiles, comportant un mécanisme d'entraînement (52,54,56,58) pour transmettre, à des roues avant et arrière (34,36) des essieux jumelés, la force exercée par un arbre moteur (24) à un arbre d'entraînement (64), par l'intermédiaire d'un différentiel (40), comportant un premier et un deuxième réducteur planétaire (66,68,72,74), étant entendu que les pignons satellites (68,72) du premier et un deuxième réducteur planétaire (66,68,72,74) sont chaque fois reliés entre eux par un arbre planétaire (70), caractérisé en ce que le premier réducteur planétaire (66,68) s'appuie, avec ses pignons satellites (68) sur une première roue creuse (76) et le deuxième réducteur planétaire (72,74) s'appuie, avec ses pignons satellites (72) sur une deuxième roue creuse (90), solidaire d'un carter d'essieux jumelés (48).

**2.** Dispositif d'entraînement suivant la revendication 1, caractérisé en ce que l'entrée côté moteur se fait par l'intermédiaire d'une première roue solaire (66) du premier réducteur planétaire (66,68) et la sortie se fait par l'intermédiaire d'une deuxième roue solaire (74) du deuxième réducteur planétaire (72,74).

**3.** Dispositif d'entraînement suivant la revendication 1 ou la revendication 2, caractérisé en ce que la transmission de force se fait, sur la deuxième roue solaire (74), par l'arbre d'entraînement (64), par l'intermédiaire de la première roue solaire (66) et du premier pignon satellite (68) engrenant avec elle, ainsi que par l'intermédiaire du deuxième pignon satellite (72), relié au premier pignon satellite (68) par l'intermédiaire de l'arbre planétaire (70), étant entendu que la deuxième roue solaire 74 entraîne un arbre central (50) qui transmet la force au mécanisme d'entraînement (54,56,58), par l'intermédiaire d'un pignon droit (52).

4.  Dispositif d'entraînement suivant la revendication 3, caractérisé en ce que l'arbre d'entraînement (64) et l'arbre central (50) sont montés avec le même axe.

5.  Dispositif d'entraînement suivant la revendication 3, caractérisé en ce que l'arbre central (50) est monté dans le carter d'essieux jumelés (48) au moyen d'un dispositif de palier (80), qui est relié de façon fixe au carter d'essieux jumelés (48) par des vis (82).

6.  Dispositif d'entraînement suivant la revendication 3, caractérisé en ce qu'on utilise, comme mécanisme d'entraînement, un entraînement par pignons dentés (28), un entraînement par chaîne ou un entraînement par courroie.

7.  Dispositif d'entraînement suivant l'une quelconque des revendications 1 à 6, caractérisé en ce que le carter d'essieux jumelés (48) est, par l'intermédiaire d'un cadre (86), monté mobile à la partie extérieure de la première roue creuse (76) au moyen d'un roulement à billes (88), le cadre (86) étant relié de façon fixe, par des vis (84), au carter d'essieux jumelés (48).

8.  Dispositif d'entraînement suivant l'une quelconque des revendications 1 à 7, caractérisé en ce que la mobilité du carter d'essieux jumelés (48) est limitée par une butée (98), fixée sur le châssis arrière (22).

Fig.1

# Fig. 2

# Fig. 3

# Fig. 4